(19) Europäisches Patentamt
European Patent Office
Office européen des brevets

(11) **EP 4 191 929 A1**

(12) **EUROPEAN PATENT APPLICATION**
published in accordance with Art. 153(4) EPC

(43) Date of publication:
**07.06.2023 Bulletin 2023/23**

(21) Application number: **21863711.4**

(22) Date of filing: **03.09.2021**

(51) International Patent Classification (IPC):
**H04L 5/00** (2006.01)

(52) Cooperative Patent Classification (CPC):
**H04L 5/00; H04L 25/03**

(86) International application number:
**PCT/CN2021/116499**

(87) International publication number:
**WO 2022/048649 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2020 CN 202010924342**

(71) Applicant: **Vivo Mobile Communication Co., Ltd.
Dongguan, Guangdong 523863 (CN)**

(72) Inventors:
• YUAN, Pu
  **Dongguan, Guangdong 523863 (CN)**
• JIANG, Dajie
  **Dongguan, Guangdong 523863 (CN)**
• PAN, Xueming
  **Dongguan, Guangdong 523863 (CN)**

(74) Representative: **Murgitroyd & Company
Murgitroyd House
165-169 Scotland Street
Glasgow G5 8PL (GB)**

(54) **PILOT FREQUENCY RECEIVING PROCESSING METHOD AND SENDING METHOD, AND RELATED DEVICE**

(57) This application discloses a pilot reception processing method, a pilot transmission method, and a related device. The method includes: determining a first position of a pilot pattern corresponding to a pilot in a delay-Doppler domain; and determining first indication information according to the first position.

Determine a first position of a pilot pattern corresponding to a pilot in a delay-Doppler domain — 501

Determine first indication information according to the first position — 502

FIG. 5

**Description**

**CROSS-REFERENCE TO RELATED APPLICATION**

This application claims priority to Chinese Patent Application No. 202010924342.8 filed in China on September 4, 2020, which is incorporated herein by reference in its entirety.

**TECHNICAL FIELD**

This application pertains to the field of communications technologies, and in particular, to a pilot reception processing method, a pilot transmission method, and a related device.

**BACKGROUND**

In a complex electromagnetic wave transmission environment, a large number of scattering, reflection, and refraction surfaces exist, which causes a difference in time when a wireless signal arrives at a receiving antenna through different paths, that is, a multipath effect of transmission. Inter symbol interference (Inter Symbol Interference, ISI) occurs when symbols before and after a transmission signal arrive at the receiving antenna through different paths simultaneously, or when a latter symbol arrives at the receiving antenna within a delay spread of a previous symbol. Similarly, in a frequency domain, due to a Doppler effect caused by a relative speed between a transmitter and a receiver, each subcarrier where a signal is located will cause an offset from a frequency in different degrees, resulting in that subcarriers that could have been orthogonal to each other overlap, that is, resulting in inter-carrier interference (Inter Carrier Interference, ICI). In communications technologies, an orthogonal frequency division multiplexing (Orthogonal frequency division multiplex, OFDM) multi-carrier system can be used, and anti-ISI performance can be improved by adding a cyclic prefix (cyclic prefix, CP). However, because a subcarrier spacing of the OFDM multi-carrier system is limited, in case of a high-speed mobile scene (such as a high-speed rail), a great Doppler frequency shift is caused by a relatively great relative speed between the transmitter and receiver, which destroys orthogonality between OFDM subcarriers, and resulting in serious ICI between the subcarriers.

An orthogonal time frequency space (Orthogonal Time Frequency Space, OTFS) technology can also be used in the communications technologies. In the OTFS technology, transformation between a delay-Doppler domain and a time-frequency domain is defined, and delay and a Doppler characteristic of a channel are captured by mapping, at the transmitter and receiver, service data and a pilot to a delay-Doppler domain simultaneously for processing and by a pilot of the delay-Doppler domain. In addition, by setting a guard interval, pilot pollution caused by the ICI in the OFDM system can be prevented, so that channel estimation is more accurate, and the receiver can increase a success rate of data decoding.

However, in the OTFS technology, due to the guard interval around a pilot symbol in the delay-Doppler domain, pilot overheads are increased and a resource utilization rate is relatively low.

**SUMMARY**

Embodiments of this application provide a pilot reception processing method, a pilot transmission method, and a related device, which can resolve a problem of a relatively low resource utilization rate.

According to a first aspect, a pilot reception processing method is provided, where the method is performed by a receiving device and includes:

determining a first position of a pilot pattern corresponding to a pilot in a delay-Doppler domain; and
determining first indication information according to the first position.

According to a second aspect, a pilot transmission method is provided, where the method is performed by a transmission device and includes:

mapping a pilot pattern corresponding to a pilot to a first position in a delay-Doppler domain; and
transmitting the pilot at the first position, where the first position is used to indicate first indication information.

According to a third aspect, a pilot reception processing apparatus is provided, including:

a first determining module, configured to determine a first position of a pilot pattern corresponding to a pilot in a delay-Doppler domain; and

a second determining module, configured to determine first indication information according to the first position.

According to a four aspect, a pilot transmission apparatus is provided, where the method is performed by a transmission device and includes:

a mapping module, configured to map a pilot pattern corresponding to a pilot to a first position in a delay-Doppler domain; and
a transmission module, configured to transmit the pilot at the first position, where the first position is used to indicate first indication information.

According to a fifth aspect, a communication device is provided, including a processor, a memory, and a program or an instruction stored in the memory and executable on the processor, where when the program or the instruction is executed by the processor, steps of the method in the first aspect are implemented, or steps of the method in the second aspect are implemented.

According to a sixth aspect, a readable storage medium is provided, where the readable storage medium stores a program or an instruction, and when the program or the instruction is executed by a processor, the steps of the method described in the first aspect or the steps of the method described in the second aspect are implemented.

According to a seventh aspect, an embodiment of this application provides a chip, including a processor and a communication interface, where the communication interface is coupled to the processor, and the processor is configured to execute a program or an instruction of a network device to implement the steps of the method according to the second aspect.

According to an eighth aspect, a computer software product is provided, where the computer software product is stored in a non-volatile storage medium, and is configured to be executed by at least one processor, to implement the steps of the method according to the first aspect or implement the steps of the method according to the second aspect.

According to a ninth aspect, a communication device is provided, where the communication device is configured to perform the method described in the first aspect, or perform the method described in the second aspect.

In this embodiment of this application, a first position of the pilot pattern corresponding to the pilot in the delay-Doppler domain is determined; and first indication information is determined according to the first position. This way, another piece of indication information can be implicitly indicated based on different positions of the pilot pattern corresponding to the pilot, so that a utilization rate of a resource can be improved.

## BRIEF DESCRIPTION OF DRAWINGS

FIG. 1 is a structural diagram of a network system to which an embodiment of this application may be applied;
FIG. 2 is a schematic diagram of conversion between a delay-Doppler plane and a time-frequency plane;
FIG. 3 is a schematic diagram of a channel response relationship in different planes;
FIG. 4 is a schematic diagram of pilot mapping in a delay-Doppler domain;
FIG. 5 is a flowchart of a pilot reception processing method according to an embodiment of this application;
FIG. 6 is a schematic diagram of division of a Doppler delay resource block in a pilot reception processing method according to an embodiment of this application;
FIG. 7 is a first schematic diagram of dividing P time-frequency resource blocks in a pilot reception processing method according to an embodiment of this application;
FIG. 8 is a second schematic diagram of dividing P time-frequency resource blocks in a pilot reception processing method according to an embodiment of this application;
FIG. 9 is a third schematic diagram of dividing P time-frequency resource blocks in a pilot reception processing method according to an embodiment of this application;
FIG. 10 is a flowchart of a pilot transmission method according to an embodiment of this application;
FIG. 11 is a structural diagram of a pilot reception processing apparatus according to an embodiment of this application;
FIG. 12 is a structural diagram of a pilot transmission apparatus according to an embodiment of this application;
FIG. 13 is a structural diagram of a communication device according to an embodiment of this application; and
FIG. 14 is a structural diagram of a terminal device according to an embodiment of this application; and
FIG. 15 is a structural diagram of a network side device according to an embodiment of this application.

## DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that the technology described in the embodiments of this application is not limited to a Long Term Evolution (Long Time Evolution, LTE)/LTE-advanced (LTE-Advanced, LTE-A) system, and may also be used in various wireless communications systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A New Radio (New Radio, NR) system is described below as an example, and the term NR is used in most of the descriptions, but these technologies can also be used in an application other than an application of the NR system, for example, a 6th generation (6th Generation, 6G) communications system.

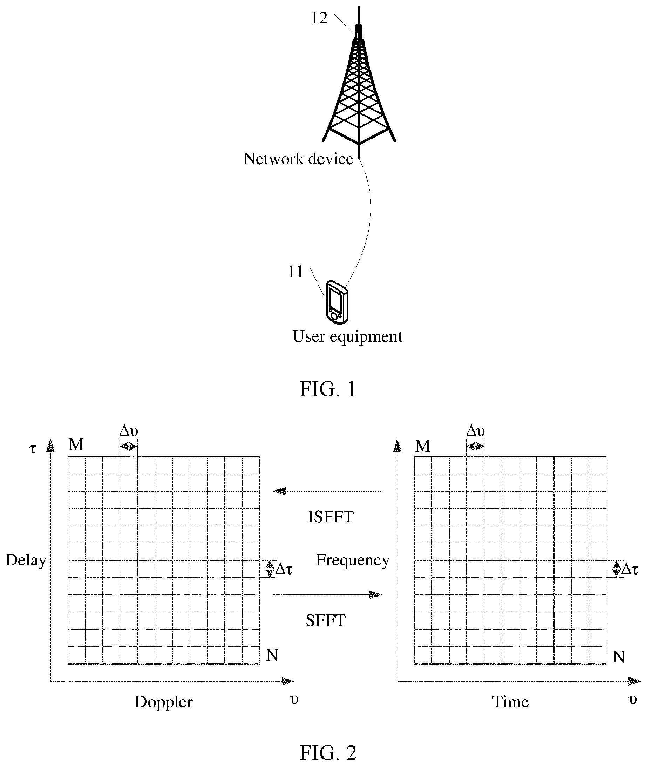

FIG. 1 is a block diagram of a wireless communications system to which an embodiment of this application may be applied. The wireless communications system includes a user equipment 11 and a network device 12. The user equipment 11 may also be referred to as a terminal device or user equipment (User Equipment, UE). The user equipment 11 may be a terminal side device such as a mobile phone, a tablet personal computer (Tablet Personal Computer), a laptop computer (Laptop Computer), or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or a vehicle user equipment (Vehicle User Equipment, VUE), or pedestrian user equipment (Pedestrian User Equipment, PUE). The wearable device includes a band, a headset, eyeglasses, or the like. It should be noted that a specific type of the user equipment 11 is not limited in the embodiments of this application. The network device 12 may be a base station or a core network device. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS) , a home Node B, a home evolved Node B, a wireless local area network (wireless local area network, WLAN) access point, a WiFi (wireless fidelity, WiFi) node, a transmission and reception point (Transmitting Receiving Point, TRP), or other certain appropriate terms in the art, provided that the same technical effects are achieved, the base station is not limited to specific technical vocabulary. It should be noted that in the embodiments of this application, a base station in the NR system is merely used as an example, but does not limit a specific type of the base station.

For ease of description, the following describes some content in the embodiments of this application:
Delay and a Doppler characteristic of a channel are essentially determined by a multipath channel. Signals arriving at a receiver at different time because the signals are propagated through different paths. For example, two return signals $s_1$ and $s_2$ arriver at the receiver after traveling distances $d_1$ and $d_2$ respectively, and then a difference in time when the

$$\Delta t = \frac{|d_1 - d_2|}{c}$$

two return signals arriver at the receiver is , and c is a light speed. Due to such difference in time between the return signals $s_1$ and $s_2$, coherent superposition of the return signals at the receiver side causes observed signal amplitude jitter, that is, a fading effect. Similarly, Doppler spread of the multipath channel is caused by a multipath effect. As we know, a Doppler effect is that, because a relative speed exists between the transmitter and the receiver, signals arriving at the receiver after traveling different paths have different incident angles relative to a normal of an antenna, which leads to a difference in relative speeds, thus resulting in a different in Doppler frequency shifts of the signals through different paths. Assuming that an original frequency of a signal is $f_0$, a relative speed between the transmitter and receiver is $\Delta V$, and an incident angle between the signal and a normal of a receiver antenna is $\theta$. Then

$$\Delta v = \frac{\Delta V}{f} \cos \theta$$

. Obviously, when two return signals $s_1$ and $s_2$ arrive at the receiver antenna through different paths and have different incident angles $\theta_1$ and $\theta_2$, their Doppler frequency shifts $\Delta v_1$ and $\Delta v_2$ are also different. To sum up, a signal seen by the receiver is a superposition of component signals from different paths and with different time delays and Doppler, and the signal is entirely reflected as a receiving signal with fading and a frequency shift relative to an original signal. Analysis of delay-Doppler of a channel helps to collect delay-Doppler information of each path, thus reflecting a delay-Doppler response of the channel.

A full name of an OTFS modulation technology is orthogonal time frequency space (Orthogonal Time Frequency Space, OTFS) modulation. In this technology, information in a data packet with a size of $M \times N$, such as a quadrature amplitude modulation (Quadrature Amplitude Modulation, QAM) symbol, is logically mapped to a grid point $M \times N$ on a two-dimensional delay-Doppler plane, that is, a pulse in each grid point modulates a QAM symbol in the data packet. Further, by designing a set of orthogonal two-dimensional functions, a data set on the delay-Doppler domain plane of $M \times N$ is transformed on a time-frequency domain plane of $N \times M$, and such transformation is mathematically called inverse symplectic Fourier transform (Inverse Sympletic Finite Fourier Transform, ISFFT). Correspondingly, transformation from a time-frequency domain to the delay-Doppler domain is called symplectic fourier transform (Symplectic Fourier Transform, SFFT). A hidden physical meaning is that the delay and Doppler effect of a signal is actually a linear superposition effect of a series of return signals with different time and frequency offsets after the signal passes through a multipath channel. In this sense, the analysis of delay-Doppler and the analysis of the time-frequency domain may be obtained by mutual conversion of the ISFFT and SFFT.

The grid point can be understood as a resource element (Resource element, RE), and a relationship of the conversion is shown in FIG. 2:

Therefore, in the OTFS technology, a time-varying multipath channel is transformed into a time-invariant two-dimensional delay-Doppler domain channel (within a certain duration), which directly reflects a channel delay-Doppler response characteristic caused by a geometric characteristic of a relative position of a reflector between the transmitter and the receiver in a wireless link. This has an advantage that the OTFS eliminates a difficulty in tracking a time-varying fading characteristic in traditional analysis of the time-frequency domain, and instead extracts all diversity characteristics of a time-frequency domain channel through the analysis of the delay-Doppler domain. In an actual system, a quantity of delay paths and Doppler frequency shifts of a channel is far less than a quantity of time domain and frequency domain responses of the channel, and therefore a channel represented by the delay-Doppler domain is relatively simple. Therefore, analysis of the delay-Doppler domain by using the OTFS technology can enable packaging of a reference signal to be more compact and flexible, especially help to support a large antenna array in a massive multiple-input multiple-output (massive Multiple-Input Multiple-Output, massive MIMO) system.

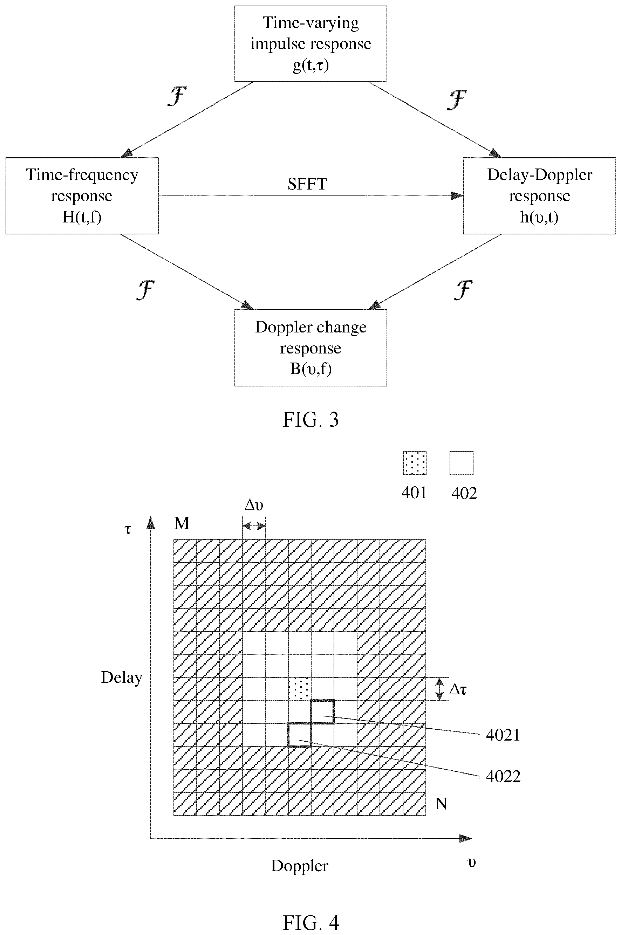

OTFS modulation defines that the QAM symbol on the delay-Doppler plane is transformed on the time-frequency domain for transmission, and then returned to the delay-Doppler domain by the receiver for processing. Therefore, a method for analysis of a wireless channel response in the delay-Doppler domain may be introduced. When a signal passes through a linear time-varying wireless channel, a relationship between expressions of a channel response of the signal in different planes is shown in FIG. 3:

In FIG. 3, a transformation formula for the SFFT is:

$$h(\tau, v) = \int \int H(t, f) e^{-j2\pi(vt-f\tau)} d\tau dv \, \#(1)$$

Correspondingly, a transformation formula for the ISFFT is:

$$H(t, f) = \int \int h(\tau, v) e^{j2\pi(vt-f\tau)} d\tau dv \, \#(2)$$

When a signal passes through a linear time-varying channel, it is assumed that a received signal in a time domain is r(t), a corresponding received signal in a frequency domain is $R(f)$, and $r(t) = \mathcal{F}^{-1}\{R(f)\}.r(t)$ may be represented in the following form:

$$r(t) = s(t) * h(t) = \int g(t, \tau) s(t - \tau) d\tau \, \#(3)$$

It can be learned from a relationship in FIG. 3,

$$g(t,\tau) = \int h(v,\tau)e^{j2\pi vt}dv \#(4)$$

After substituting (4) into (3), the following is obtained:

$$r(t) = \int\int h(v,\tau)s(t-\tau)e^{j2\pi vt}d\tau dv \qquad (5)$$

It can be learned from the relationship shown in FIG. 3, the classical Fourier transform theory, and a formula (5), that

$$
\begin{aligned}
r(t) &= \int\int h(v,\tau)\left(\int S(f)\,e^{j2\pi f(t-\tau)}df\right)e^{j2\pi vt}d\tau dv \\
&= \int\left(\int\int h(v,\tau)e^{j2\pi(vt-f\tau)}d\tau dv\right)S(f)e^{j2\pi ft}df \\
&= \int H(t,f)S(f)e^{j2\pi ft}df \\
&= \mathcal{F}^{-1}\{R(f)\}\#(6)
\end{aligned}
$$

v represents a delay variable, $\tau$ represents a Doppler variable, f represents a frequency variable, and t represents a time variable.

An Equation (6) implies that the analysis of the delay-Doppler domain in an OTFS system can be implemented by relying on an existing communication framework based on the time-frequency domain and adding additional signal processing at the transmitter and receiver. In addition, the additional signal processing includes only the Fourier transform, which may be completely implemented by existing hardware without adding a new module. This good compatibility with an existing hardware system greatly facilitates application of the OTFS system. In an actual system, the OTFS technology may be easily implemented as a pre-processing module and a post-processing module of a filtered OFDM system, and therefore the OTFS technology has good compatibility with a multi-carrier system under an existing NR technology framework.

When the OTFS is combined with the multi-carrier system, implementation at the transmitter is as follows: a QAM symbol containing to-be-transmitted information is carried by a waveform of the delay-Doppler plane, converted into a waveform of a time-frequency domain plane in a traditional multi-carrier system through a two-dimensional ISFFT, transformed into a time-domain sampling point by one-dimensional inverse fast Fourier transform (Inverse Fast Fourier Transform, IFFT) at a symbol level and serial-parallel conversion, and then sent.

The receiver of the OTFS system is roughly a reverse process of the transmitter: after the time domain sampling point is received by the receiver, the time domain sampling point is first transformed into a waveform on the time-frequency domain plane through parallel-serial conversion and one-dimensional fast fourier transform (Fast Fourier Transform FFT) at the symbol level and then converted into a waveform on the delay-Doppler domain plane through the SFFT, and then the QAM symbol carried by the waveform in the delay-Doppler domain is processed by the receiver, including channel estimation and equalization, demodulation and decoding, and the like.

Advantages of the OTFS modulation are mainly reflected in the following aspects:
the OTFS modulation converts the time-varying fading channel in the time-frequency domain between the transmitter and the receiver into a deterministic fading-free channel in the delay-Doppler domain. In the delay-Doppler domain, each symbol in a group of information symbols transmitted at one time experiences a same static channel response and signal noise ratio (Signal Noise Ratio, SNR).

The OTFS system analyzes a reflector in a physical channel through a delay-Doppler image, and coherently combines energy from different reflection paths by using a receiving equalizer, which actually provides a static channel response without fading. By using the foregoing static channel characteristic, there is no need to introduce closed-loop channel adaptation for the OTFS system like the OFDM system to deal with a fast-changing channel, thus improving system robustness and reducing complexity of system design.

Because a quantity of delay-Doppler states in the delay-Doppler domain is much less than a quantity of time-frequency states in the time-frequency domain, a channel in the OTFS system can be expressed in an extremely compact form. Overheads for channel estimation of the OTFS system is less and more accurate.

Another advantage of the OTFS is that it can be used in an extreme Doppler channel. By analyzing the delay-Doppler image with an appropriate signal processing parameter, a Doppler characteristic of a channel will be fully presented, which facilitates signal analysis and processing in a Doppler sensitive scene (such as high-speed moving and a millimeter wave).

To sum up, channel estimation in the OTFS system is performed in the following method: the transmitter maps a pilot pulse in the delay-Doppler domain, and the receiver estimates a channel response $h(v, \tau)$ of the delay-Doppler domain through analysis of a pilot delay-Doppler image, and then a channel response expression of the time-frequency domain can be obtained according to a relationship in FIG. 3, which helps to apply an existing technology in the time-frequency domain for signal analysis and processing. Pilot mapping on the delay-Doppler plane may be performed in a form in FIG. 4.

In FIG. 4, a transmission signal includes a single-point pilot 401 at $(l_p, k_p)$, a protection symbol 402 with an area of $(2l_v + 1)(4k_v + 1) - 1$ around the single-point pilot, and a data part of $MN - (2l_v + 1)(4k_v + 1)$. At the receiver, two offset peaks (such as 4021 and 4022) appear in a guard band of a delay-Doppler domain grid point, which means that two secondary paths with different delay-Doppler exist in addition to a main path. An amplitude, a delay, and Doppler parameters of all secondary paths are measured, and a delay-Doppler domain expression of a channel is obtained, namely $h(v, \tau)$. To prevent data on a grid point of a received signal from polluting a pilot symbol, resulting in inaccurate channel estimation, an area of the protection symbol should satisfy the following condition:

$$l_\tau \geq \tau_{max}M\Delta f, k_v \geq v_{max}N\Delta T \#(7)$$

$\tau_{max}$ and $v_{max}$ are a maximum delay and a maximum Doppler frequency shift of all paths of a channel, respectively. Multiple guard symbols 402 surround the single-point pilot 401 to form the guard band, and the multiple guard symbols 402 correspond to a blank resource element.

A pilot reception processing method according to an embodiment of this application will be described in detail below with reference to the accompanying drawings through specific embodiments and application scenarios thereof.

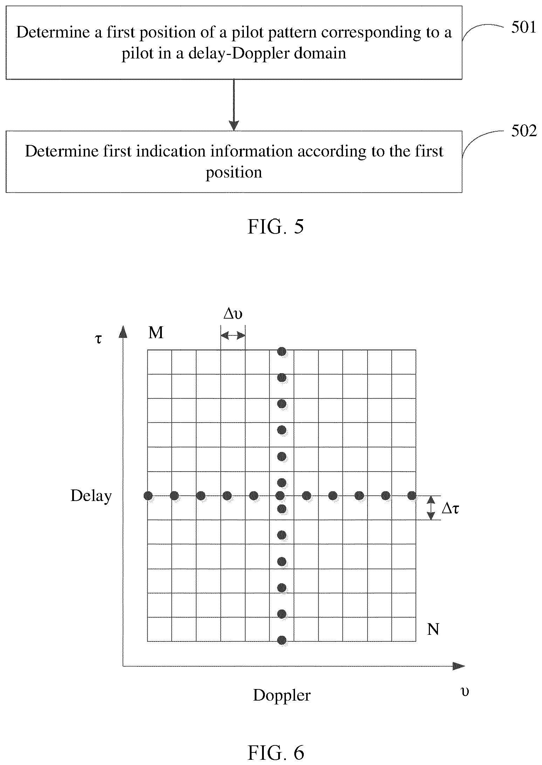

Please refer to FIG. 5, FIG. 5 is a flowchart of a pilot reception processing method according to an embodiment of this application. The method is performed by a receiving device, and as shown in FIG. 5, includes the following steps:

   Step 501: Determine a first position of a pilot pattern corresponding to a pilot in a delay-Doppler domain; and
   Step 502: Determine first indication information according to the first position.

In this embodiment of this application, different positions of the pilot pattern correspondingly and implicitly indicate different pieces of indication information. A transmission device may first determine first indication information to be indicated, determine a first position of the pilot pattern in a Doppler domain based on the first indication information, and transmit a pilot based on the first position and the pilot pattern.

In some alternative embodiments, other pieces of indication information may be implicitly indicated directly based on a position of the pilot pattern on a delay-Doppler resource block. In some alternative embodiments, the delay-Doppler resource block in the delay-Doppler domain may be used for regional division. For example, the delay-Doppler resource block in the delay-Doppler domain includes Q sub-regions, where Q is an integer greater than 1, and the first position includes a target sub-region in the Q sub-regions, and the pilot pattern is located in the target sub-region.

The first position of the pilot pattern can be understood as a first position of the pilot, that is, a position of a target sub-region, in the Q sub-regions, to which the pilot or the pilot pattern belongs. In other words, in this embodiment of this application, the first indication information can be determined according to the position of the target sub-region in the Q sub-regions. It should be understood that the first indication information may be bit information, or another piece of specific information implicitly indicated, for example, information associated with the bit information. In the following embodiments, for example, the first indication information is used to indicate the bit information.

The delay-Doppler resource block can be understood as a delay-Doppler resource frame or all resource elements in the delay-Doppler resource frame.

It should be understood that the delay-Doppler resource block may include M × N resource grids, and the M × N resource grids can be divided into $m_i \times n_i$ sub-regions of with a size of $i$ according to a protocol or a division mode indicated by the transmission device. As shown in FIG. 6, in some embodiments, M × N resource grids can be divided into four sub-regions according to dotted lines. In this case, an information bit that can be indicated by an $i^{th}$ position is $b = floor(log_2 i)$, that is, 2-bit information can be indicated.

In FIG. 6, when the pilot pattern corresponding to the pilot is located in an upper left sub-region, bit information indicated by the first indication information is 11; when the pilot pattern corresponding to the pilot is located in a lower left sub-region, bit information indicated by the first indication information is 10; when the pilot pattern corresponding to the pilot is located in a lower right sub-region, bit information indicated by the first indication information is 01; and when the pilot pattern corresponding to the pilot is located in an upper right sub-region, bit information indicated by the first indication information is 00.

Optionally, the transmission device and the receiving device may both be user equipment, or one of the transmission device and the receiving device may be a user equipment and the other may be a network device. After the receiving device receives a pilot transmitted by the transmission device, the pilot can be used for channel estimation and measurement to implement demodulation of a data packet. The pilot pattern can be understood as receiving a currently configured pilot pattern, that is, both the transmission device and the receiving device use the pilot pattern for pilot transmission.

Optionally, the pilot pattern may be indicated through pilot configuration. In some embodiments, the pilot pattern is a rectangular resource pattern formed by $l \times k$ resource elements, including a resource element where a pilot pulse is located in a center and a blank resource element arranged around a resource element where the pilot pulse is located. The blank resource element arrange around the resource element where the pilot pulse is located form a guard band. As shown in FIG. 4, a first pilot pattern may be a $5 \times 5$ rectangular resource pattern, including resource elements corresponding to 401 and 402.

In this embodiment of this application, a first position of the pilot pattern corresponding to the pilot in the delay-Doppler domain is determined; and first indication information is determined according to the first position. This way, another piece of indication information can be implicitly indicated based on different positions of the pilot pattern corresponding to the pilot, so that a utilization rate of a resource can be improved.

It should be understood that in another embodiment, different pieces of indication information can also be indicated by different pilot patterns, for example, different combinations of ($l$, $k$) correspond to different pilot patterns, and it can be assumed that ($l1$, $k1$) represents a pilot pattern 1 to indicate one piece of indication information; and ($l2$, $k2$) represents a pilot pattern 2 to indicate another kind of indication information. Definitely, in another embodiment, joint indication can be performed based on different pilot patterns and the foregoing first position, thereby increasing a capacity of the indication information. $l$ can be understood as a value of the pilot pattern in a delay dimension and $k$ can be understood as a value of the pilot pattern in a Doppler dimension.

Optionally, in some embodiments, a complete pilot pattern is located in a sub-region. In other words, a quantity of resource grids of each sub-region in the Doppler dimension is greater than or equal to a quantity of resource grids of a pilot pattern in the Doppler dimension; and a quantity of resource grids of each sub-region in the delay dimension is greater than or equal to a quantity of resource grids of a pilot pattern in the delay dimension. This way, a position where the transmission device transmits the pilot and a position where the receiving device receives the pilot are both located in a same sub-region, thus ensuring consistency of understanding of the first indication information by the receiving device and the transmission device.

In this embodiment of this application, each sub-region is a rectangular region of $m_i \times n_i$, and each sub-region

satisfies: $\begin{cases} m_i \geq l_p + l_\tau \\ n_i \geq k_p + 2k_v \end{cases}$ , where $m_i$ represents a length of the sub-region in a delay dimension, $n_i$ represents a

length of the sub-region in a Doppler dimension, $l_\tau$ represents a $\frac{1}{2}$ length of the pilot pattern in the delay dimension, $k_v$

represents a $\frac{1}{4}$ length of the pilot pattern in the Doppler dimension, and $l_p$ and $k_p$ represent coordinates of a position at which a single-point in the pilot pattern pilot is transmitted in a target coordinate system, where the target coordinate system is a coordinate system established based on a vertex angle of the sub-region as an original point. For example, a rectangular coordinate system can be established by using a bottom left corner as the original point, where one of the time delay domain and Doppler domain is used as a horizontal axis and the other is as a vertical axis in the target coordinate system.

In this embodiment of this application, the delay dimension can be understood as the delay domain, and the Doppler dimension can be understood as the Doppler domain.

Optionally, in some embodiments, the determining first indication information according to the first position includes:

determining the first indication information according to first positions of pilot patterns within P time-frequency resource blocks in the delay-Doppler domain, where P is an integer greater than 1.

In this embodiment of this application, a pilot transmitted by P time-frequency resource blocks may include one or more pilots, where at most one pilot allowed to be transmitted is disposed in each time-frequency resource block. Each pilot has a corresponding pilot pattern.

Optionally, in some embodiments, a position of different time-frequency resource frames and the first position may be combined to indicate the first indication information. For example, if a pilot pattern is located in a 00 region of a corresponding delay-Doppler resource block, indication information of the pilot pattern in a time-frequency resource frame 1 is different from indication information of the pilot pattern in a time-frequency resource frame 2. In other words, after a data set on the delay-Doppler resource block is transformed into the time-frequency domain, a mapped time-frequency resource block may also implicitly indicate part of the indication information, and the first position may indicate part of the indication information, and the two parts of indication information jointly indicate the first indication information. For example, after the data set on the delay-Doppler resource block is transformed into the time-frequency domain, the mapped time-frequency resource block can also implicitly indicate bit 00, and a bit sequence indicated by the pilot pattern at the first position is 11, and then the first indication information can be understood as 0011 or 1100.

Optionally, in some embodiments, the first indication information may also be jointly indicated based on a relative position of the pilot pattern of P pilots in the delay-Doppler domain and the first position of the pilot pattern. For example, a quantity of sub-regions of an interval between sub-regions where pilot patterns of two adjacent pilots are located as well as the first position of the pilot pattern in the sub-region indicate the first indication information.

Optionally, in some embodiments, the determining the first indication information according to first positions of pilot patterns within P time-frequency resource blocks in the delay-Doppler domain includes:

determining P pieces of sub-indication information according to a first position of a pilot pattern in each of the P time-frequency resource blocks in the delay-Doppler domain; and

determining the first indication information according to the P pieces of sub-indication information.

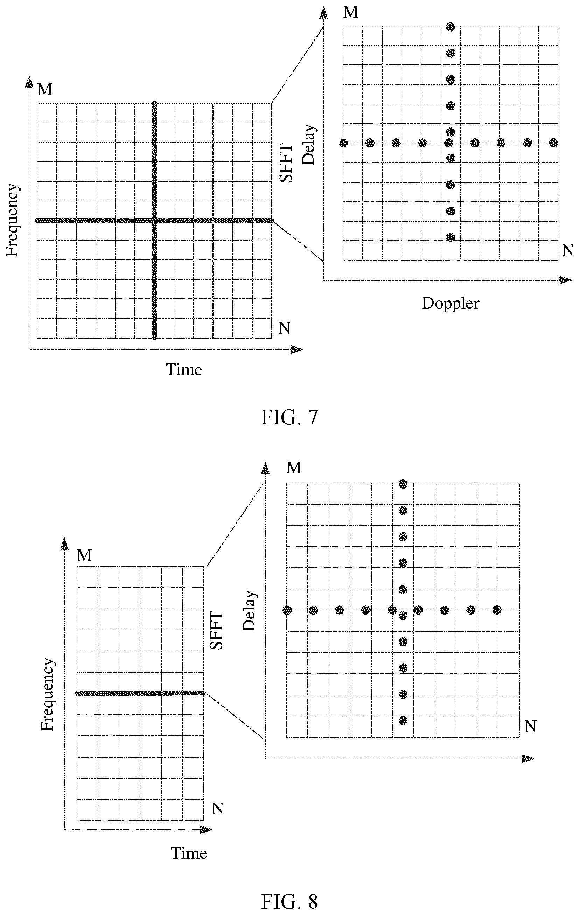

In this embodiment of this application, one pilot is transmitted on each time-frequency resource block, and joint indication can be performed through pilot patterns corresponding to P pilots transmitted by the P time-frequency resource blocks, that is, the first indication information can be understood as joint indication information of sub-indication information corresponding to each pilot pattern in the P time-frequency resource blocks. A time-frequency resource block can be understood as a time-frequency resource frame (that is, a radio frame or a time slot) or all resource elements in a time-frequency resource frame, and a time-frequency resource block corresponds to a delay-Doppler resource block. Each time-frequency resource block is divided into $q$ sub-regions, and a bit that can be indicated by the first indication information of the joint indication is $b = floor(P \log_2 i)$. As shown in FIG. 7, it can be assumed that four time-frequency resource blocks perform joint indication, and in this case, the first indication information may be bit information of eight bits.

Optionally, the P time-frequency resource blocks satisfy any one of the following:

the P time-frequency resource blocks are located in a same time resource and different frequency resources;
the P time-frequency resource blocks are located in a same frequency resource and different time resources; and
the P time-frequency resource blocks are located in different frequency resources in a preset time period.

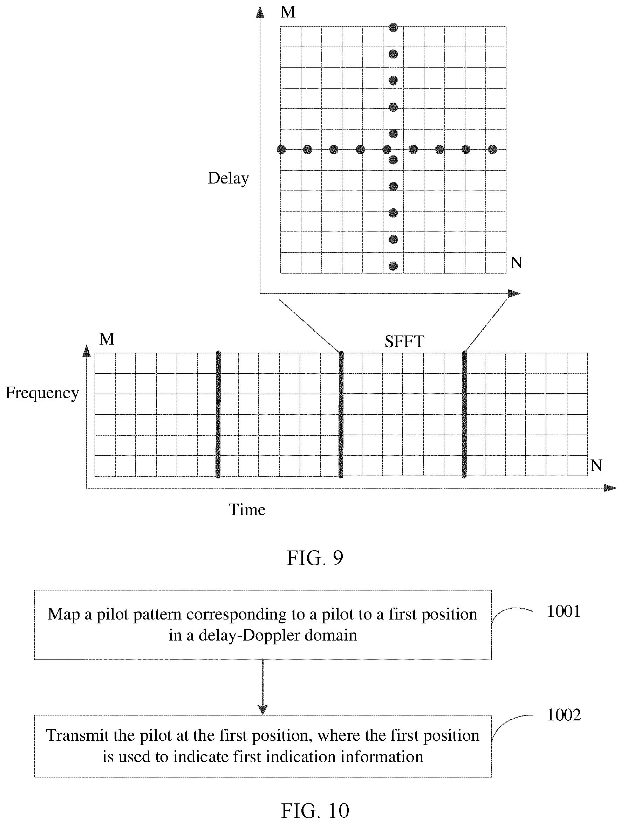

Different time resources can be understood as different time resource frames, and different frequency resources can be understood as different sub-channels. That the P time-frequency resource blocks are located in a same time resource and different frequency resources can be understood as follows: the P time-frequency resource blocks include time-frequency resource blocks located on P sub-channels in a time resource frame, as shown in FIG. 8. That the P time-frequency resource blocks are located in a same frequency resource and different time resources can be understood as: the P time-frequency resource blocks include a time-frequency resource block corresponding to continuous P time resource frames located on a same sub-channel, as shown in FIG. 9. The foregoing preset time period can be understood as continuous M1 time resource frames, where M1 is an integer greater than 1. That the P time-frequency resource blocks are located in different frequency resources in a preset time period can be understood as that the P time-frequency resource blocks include a time-frequency resource block corresponding to M2 sub-channels in the continuous M1 time resource frames, where M1*M2=P. When values of M1 and M2 are both 2, as shown in FIG. 7.

In this embodiment, for example, sub-indication information of each pilot is bit information, and the first indication information may be specifically a first bit sequence, as shown in FIG. 6, and the first bit sequence is a bit sequence of two bits. Definitely, in other embodiments, more or less bits can be set according to actual needs.

Optionally, the determining the first indication information according to the P pieces of sub-indication information includes:
cascading P first bit sequences according to a preset order to obtain a second bit sequence, where the first indication information includes the second bit sequence.

In some embodiments, the preset order is determined by an arrangement order of a second position, and the second position is a position of a time-frequency resource block mapped after the pilot is transformed from a delay-Doppler resource domain to a time-frequency domain. For example, a cascade sequence for the P time-frequency resource blocks can be predetermined by the transmission device or according to a protocol. For example, the cascade sequence can be determined according to a size of the time domain and frequency domain, and is not further limited herein. As shown in FIG. 7, for example, the P time-frequency resource blocks are cascaded clockwise. Sub-indication information of a pilot in a delay-Doppler resource block corresponding to an upper right time-frequency resource block is 00, sub-indication information of a pilot in a delay-Doppler resource block corresponding to a lower right time-frequency resource block is 01, sub-indication information of a pilot in a delay-Doppler resource block corresponding to a lower left time-frequency resource block is 10, and sub-indication information of a pilot in a delay-Doppler resource block corresponding to an upper left time-frequency resource block is 11. In this case, first indication information corresponding to the four time-frequency resource blocks is 11100100.

Further, in some embodiments, the first indication information is used to indicate a cell identifier or a user equipment identifier.

In a case of multiple cells, the first indication information can be used to distinguish a pilot transmitted by different cells. In a case that multiple cells share a spectrum, a traditional OFDM system distinguishes, through sequence detection, different pilot sequences transmitted by different cells. In the OTFS system, because a single-point pilot pulse in the delay-Doppler domain can be measured only by power detection, pilots are distinguished in another method. In this embodiment of this application, different positions can be selected for pilot pulses transmitted by different cells, to distinguish a cell that a pilot pulse detected by the receiver comes from.

It should be noted that pilot design for multiple cells may be applied to different UE in a same cell for multi-user multiple-input multiple-output (Multi-User Multiple-Input Multiple-Output, MU-MIMO).

In a cellular network, one cell is divided into three sectors, and each sector is adjacent to a sector of two neighboring cells, that is, a quantity of a group of neighboring cells is generally three, which can be distinguished by 2-bit information. Therefore, according to division similar to FIG. 6, a delay-Doppler domain resource block with a size of $M \times N$ can be divided into $\frac{M}{2} \times \frac{N}{2}$ sub-regions with a size of 4 and numbered {0,1,2,3} sequentially. Assuming that a Cell ID of a cell is $C_{id}$, a pilot of the cell is transmitted on a $mod(C_{id}, 3)$ sub-region. For example, if a cell with the Cell ID of 11 satisfies $mod(C_{id}, 3) = 1$, a pilot point is transmitted on a grid with a coordinate of ( $\frac{N}{4}, \frac{3M}{4}$ ), that is, a center position of a sub-region numbered 1. Therefore, when the receiving device detects a pilot pulse on a sub-region 1 by power detection, it can be determined that a cell 11 transmits a pilot at this position. If the cell 11 is a serving cell of the receiving device, the receiving device may perform channel estimation, measurement feedback, and the like by using this pilot. If the cell 11 is not a serving cell of the receiving device, the receiving device may ignore this pilot.

Generally, when a quantity of neighboring cells in a group is $K$, at least $K$ orthogonal sub-regions can be divided in a delay-Doppler domain resource frame with a size of $M \times N$, and are numbered {0,1,2, ..., $K$} sequentially. Assuming that a Cell ID of a cell is $C_{id}$, a pilot of the cell is transmitted in a $mod(C_{id}, K)$ sub-region, which ensures that a pilot of each cell and a delay-Doppler shifted (delay- Doppler shifted) version of each cell on a receiving device side all fall in a same sub-region, and will not be detected by the receiving device by mistake.

In a case that multiple UEs share a spectrum, pilots transmitted by different cells can be distinguished. In a case that multiple UEs share a spectrum, a traditional OFDM system distinguishes, through sequence detection, different pilot sequences transmitted by different LTEs. In the OTFS system, because a single-point pilot pulse in the delay-Doppler domain can be measured only by power detection, pilots are distinguished in another method. In this embodiment of this application, different positions can be selected for pilot pulses transmitted by different LTEs, to distinguish a cell that a pilot pulse detected by the receiver comes from.

Assuming that a group of UEs with a quantity of $L$ share some of same time-frequency resources, and pilots of the UEs are also transmitted on some of same time-frequency resources. Then, $\log_2 L$ bits are required for differentiation. Therefore, a delay-Doppler domain resource block with a size of $M \times N$ can be divided into $L$ sub-regions and numbered {0,1, ... , $L$} sequentially. Assuming that an ID of a UE is $U_{id}$, a pilot of the UE is transmitted on a $mod(U_{id}, L)^{th}$ sub-region. This ensures that a pilot of each UE and a delay-Doppler shifted version of each LTE on the receiver side all fall in a same sub-region, and will not be detected by the receiver by mistake.

It should be noted that, in this embodiment of this application, a whole time-frequency resource block can also be divided into multiple sub-regions, a pilot transmitted in each sub-region corresponds to a specific user equipment, and each sub-region is further divided into sub-sub-regions, and a pilot of a specific UE is transmitted in different sub-sub-regions within a sub-region corresponding to the UE. For a transmission mode, please refer to the foregoing embodiment.

To better understand this application, an implementation process of this application will be explained in detail by different embodiments below.

Embodiment 1: a delay-Doppler domain resource frame with a size of $M \times N$ is divided into $i$ sub-regions with a size of $m_i \times n_i$. In any rectangular region of $m_i \times n_i$, a plane coordinate system with a vertex in a lower left corner as an original point (0,0). A pilot pattern includes a single-point pilot located at $(I_p, k_p)$ and a guard symbol with an area of $(2l_\tau + 1)(4k_v + 1) - 1$ around the single-point pilot, where $l$ represents a variable of a delay dimension, and k represents a variable of a Doppler dimension. Then a condition in which the pilot pattern completely falls within the $m_i \times n_i$ sub-region is as follows:

$$\begin{cases} m_i \geq l_p + l_\tau, \\ n_i \geq k_p + 2k_v. \end{cases} \#(8)$$

When formula (8) holds, a size of a pilot guard band can completely cover delay and Doppler spread of a channel. Therefore, no matter what kind of delay-Doppler response the pilot has experienced in the channel, a pilot pulse is always in the $m_i \times n_i$ sub-region on a delay-Doppler spectrum of a receiving side. Therefore, it can be ensured that the receiver can correctly determine an initial region mapped by the pilot pattern, thus correctly indicating implicit information according to a position of the pilot pattern.

Optionally, the receiver converts a received sampling point in a time domain into a QAM symbol in a delay-Doppler domain through an OFDM demodulator (demodulator) and OTFS transformation (that is, SFFT), and then determines a position of a pilot pulse by using signal power detection based on a threshold. It should be understood that because power boost is usually performed for transmission of a pilot, a power of a pilot pulse at a receiver side is much greater than a data power, and the pilot pulse and the data symbol experience same fading. Therefore, it is easy to determine a pilot position by power detection, that is, a sub-region where the pilot pattern is located is obtained.

When a detected pilot pattern is in different sub-regions, the detected pilot pattern corresponds to different information bits. As shown in FIG. 6, a whole frame is divided into four sub-regions, and four possible pilot positions may indicate 2-bit information in total.

Embodiment 2: a delay-Doppler domain resource frame with a size of $M \times N$ is divided into $i$ sub-regions with a size of $m_i \times n_i$. In any rectangular region of $m_i \times n_i$, a plane coordinate system with a vertex in a lower left corner as an original point (0,0). A pilot pattern includes a single-point pilot located at $(I_p, k_p))$ and a guard symbol with an area of $(2l_\tau + 1)(4k_v + 1) - 1$ around the single-point pilot. Then a condition in which the pilot pattern completely falls within the $m_i \times n_i$ sub-region is as follows:

$$\begin{cases} m_i \geq l_p + l_\tau, \\ n_i \geq k_p + 2k_v. \end{cases} \#(8)$$

When a condition of equation (8) is satisfied, the pilot pattern completely falls within the $m_i \times n_i$ sub-region.

Optionally, a group of $P$ time-frequency resource frames transmitted sequentially can be defined, $\forall i, j \in P$, and by using a relative position relationship for pilot transmission in an $i^{th}$ and $j^{th}$ time-frequency resource frames, a small amount of information can also be carried. For example, assuming that a group of 2 time-frequency resource frames transmitted in order are defined, an intra-frame partitioning method shown in FIG. 6 is used. In a first time-frequency resource frame, there are $C_4^1 = 4$ possible pilot positions; and in a second time-frequency resource frame, there are $C_4^1 = 4$ possible pilot positions. There are $C_4^1 \cdot C_4^1 = 16$ possible values for a combination of every two pilot positions in two time-frequency resource frames. Therefore, a quantity of information bits that can be indicated is four.

Similarly, for a group of $P$ resource frames transmitted in order, a quantity of partitions within each resource frame is $q_i$, $0 < i \leq P$, and there may be $C_q^1 \cdot C_q^1 \cdot ... \cdot C_q^1 = \prod_{i=1}^{P} C_{q_i}^1$ possible values of a pilot position combination in P resource frames. Therefore, a quantity of information bits that can be indicated is:

$$Q = \log_2 \prod_{i=1}^{P} C_{q_i}^1 = \sum_{i=1}^{P} \log_2 q_i \qquad (9)$$

Embodiment 3: a delay-Doppler domain resource frame with a size of $M \times N$ is divided into $i$ sub-regions with a size of $m_i \times n_i$. In any rectangular region of $m_i \times n_i$, a plane coordinate system with a vertex in a lower left corner as an original point (0,0). A pilot pattern includes a single-point pilot located at $(I_p, k_p))$ and a guard symbol with an area of $(2l_\tau + 1)(4k_v + 1) - 1$ around the single-point pilot. Then a condition in which the pilot pattern completely falls within the

$m_i \times n_i$ sub-region is as follows:

$$\begin{cases} m_i \geq l_p + l_\tau, \\ n_i \geq k_p + 2k_v. \end{cases} \#(8)$$

When a condition of equation (8) is satisfied, the pilot pattern completely falls within the $m_i \times n_i$ sub-region.

Optionally, when the UE can simultaneously transmit data on different sub-channels (sub-channel), a group of $P$ time-frequency resource frames that are simultaneously transmitted on different sub-channels can be defined. In addition, $\forall i, j \in P$, a small amount of information can be carried by using a relative position relationship for pilot transmission in an $i^{th}$ sub-channel and a $j^{th}$ sub-channel. For example, assuming that a group of 2 resource frames that are transmitted simultaneously on different sub-channels is defined, an intra-frame partitioning method of FIG. 6 is used. In a first time-frequency resource frame, there are $C_4^1 = 4$ possible pilot positions; and in a second time-frequency resource frame, there are $C_4^1 = 4$ possible pilot positions. There are $C_4^1 \cdot C_4^1 = 16$ possible values for a combination of every two pilot positions in two time-frequency resource frames. Therefore, a quantity of information bits that can be indicated is four.

Similarly, for a group of $P$ resource frames simultaneously transmitted in a group of sub-channels, a quantity of partitions within each resource frame is $q_i$, $0 < i \leq P$, and there may be $C_q^1 \cdot C_q^1 \cdot ... \cdot C_q^1 = \prod_{i=1}^{P} C_{q_i}^1$ possible values of a pilot position combination in P resource frames. Therefore, a quantity of information bits that can be indicated is:

$$Q = \log_2 \prod_{i=1}^{P} C_{q_i}^1 = \sum_{i=1}^{P} \log_2 q_i \#(10)$$

Embodiment 4: a delay-Doppler domain resource frame with a size of $M \times N$ is divided into $i$ sub-regions with a size of $m_i \times n_i$. In any rectangular region of $m_i \times n_i$, a plane coordinate system with a vertex in a lower left corner as an original point (0,0). A pilot pattern includes a single-point pilot located at $(l_p, k_p)$ and a guard symbol with an area of $(2l_\tau + 1)(4k_v + 1) - 1$ around the single-point pilot. Then a condition in which the pilot pattern completely falls within the $m_i \times n_i$ sub-region is as follows:

$$\begin{cases} m_i \geq l_p + l_\tau, \\ n_i \geq k_p + 2k_v. \end{cases} \#(8)$$

When a condition of equation (8) is satisfied, the pilot pattern completely falls within the $m_i \times n_i$ sub-region.

Optionally, when the UE can simultaneously transmit data on different sub-channels (sub-channel), a group of P time-frequency resource frames that are simultaneously transmitted on different sub-channels in a time interval can be defined. In addition, $\forall i, j \in P$, a small amount of information can be carried by using a relative position relationship for pilot transmission in a $i^{th}$ sub-channel and a $j^{th}$ sub-channel. For example, assuming that a group of 4 time-frequency resource frames that are transmitted on different sub-channels in a time interval is defined, an intra-frame partitioning method of FIG. 6 is used. In each resource frame, there are $C_4^1 = 4$ possible pilot positions. There are $C_4^1 \cdot C_4^1 \cdot C_4^1 \cdot C_4^1 = 256$ possible values of a pilot position combination in four resource frames. Therefore, a quantity of information bits that can be indicated is eight.

Similarly, for a group of $P$ resource frames simultaneously transmitted in different sub-channels in a time interval, a quantity of partitions within each resource frame is $q_i$, $0 < i \leq P$, and there may be $C_q^1 \cdot C_q^1 \cdot ... \cdot C_q^1 = \prod_{i=1}^{P} C_{q_i}^1$ possible values of a pilot position combination in P resource frames. Therefore, a quantity of information bits that can be indicated is:

$$Q = \log_2 \prod_{i=1}^{P} C_{q_i}^1 = \sum_{i=1}^{P} \log_2 q_i \#(10)$$

Please refer to FIG. 10. FIG. 10 is a flowchart of a pilot transmission method according to an embodiment of this application. The method is performed by a receiving device, and as shown in FIG. 10, includes the following steps:

Step 1001: Determine a first position of a pilot pattern corresponding to a pilot in a delay-Doppler domain; and
Step 1002: Determine first indication information according to the first position.

Optionally, a delay-Doppler resource block in the delay-Doppler domain includes Q sub-regions, where Q is an integer greater than 1, and the first position includes a target sub-region in the Q sub-regions, and the pilot pattern is located in the target sub-region.

Optionally, a complete pilot pattern is located in a sub-region.

Optionally, each sub-region is a rectangular region of $m_i \times n_i$, and each sub-region satisfies:

$$\begin{cases} m_i \geq l_p + l_\tau \\ n_i \geq k_p + 2k_v \end{cases}$$

, where $m_i$ represents a length of the sub-region in a delay dimension, $n_i$ represents a length of the sub-region in a Doppler dimension, $l_\tau$ represents a $\frac{1}{2}$ length of the pilot pattern in the delay dimension, $k_v$ represents a $\frac{1}{4}$ length of the pilot pattern in the Doppler dimension, and $l_p$ and $k_p$ represent coordinates of a position at which the pilot is transmitted in the pilot pattern in a target coordinate system, where the target coordinate system is a coordinate system established based on a vertex angle of the sub-region as an original point. For example, a rectangular coordinate system may be established with a bottom left vertex angle as the original point.

Optionally, the first indication information is determined according to first positions of pilot patterns within P time-frequency resource blocks in the delay-Doppler domain, where P is an integer greater than 1.

Optionally, a first position, in the delay-Doppler domain, of a pilot pattern in each of the P time-frequency resource blocks indicates P pieces of sub-indication information, and the first indication information is determined by the P pieces of sub-indication information.

Optionally, the P time-frequency resource blocks satisfy any one of the following:

the P time-frequency resource blocks are located in a same time resource and different frequency resources;
the P time-frequency resource blocks are located in a same frequency resource and different time resources; and
the P time-frequency resource blocks are located in different frequency resources in a preset time period.

Optionally, the sub-indication information is a first bit sequence.

Optionally, the first indication information includes a second bit sequence obtained by cascading P first bit sequences in a preset order.

Optionally, the preset order is determined by an arrangement order of a second position, and the second position is a position of a time-frequency resource block mapped after the pilot is transformed from a delay-Doppler resource domain to the time-frequency domain.

Optionally, the first indication information is used to indicate a cell identifier or a user equipment identifier.

It should be noted that the embodiment is used as an implementation of the transmission device corresponding to the embodiment shown in FIG. 5. For specific implementation, please refer to the relevant description of the embodiment shown in FIG. 5 and a same technical effect can be achieved. To avoid repetition, details are not described herein again.

It should be noted that the pilot reception processing method provided by the embodiment of this application can be performed by a pilot reception processing apparatus, or a control module in the pilot reception processing apparatus configured to perform the pilot reception processing method. In an embodiment of this application, that the pilot reception processing apparatus performs the pilot reception processing method is used as an example to describe the pilot reception processing method provided by this embodiment of this application.

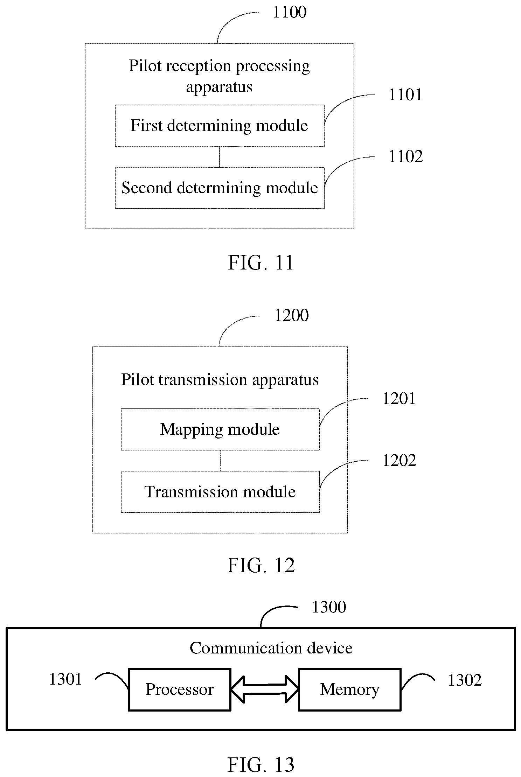

Please refer to FIG. 11. FIG. 11 is a structural diagram of a pilot reception processing apparatus provided by an embodiment of this application. As shown in FIG. 11, the pilot reception processing apparatus 1100 includes:

a first determining module 1101, configured to determine a first position of a pilot pattern corresponding to a pilot in a delay-Doppler domain; and
a second determining module 1102, configured to determine first indication information according to the first position.

Optionally, a delay-Doppler resource block in the delay-Doppler domain includes Q sub-regions, where Q is an integer greater than 1, and the first position includes a target sub-region in the Q sub-regions, and the pilot pattern is located in the target sub-region.

Optionally, a complete pilot pattern is located in a sub-region.

Optionally, each sub-region is a rectangular region of $m_i \times n_i$, and each sub-region satisfies: $\begin{cases} m_i \geq l_p + l_\tau \\ n_i \geq k_p + 2k_v \end{cases}$, where $m_i$ represents a length of the sub-region in a delay dimension, $n_i$ represents a length of the sub-region in a Doppler dimension, $l_\tau$ represents a $\frac{1}{2}$ length of the pilot pattern in the delay dimension, $k_v$ represents a $\frac{1}{4}$ length of the pilot pattern in the Doppler dimension, and $l_p$ and $k_p$ represent coordinates of a position at which the pilot is transmitted in the pilot pattern in a target coordinate system, where the target coordinate system is a coordinate system established based on a vertex angle of the sub-region as an original point.

Optionally, the second determining module 1102 is specifically configured to determine the first indication information according to first positions of pilot patterns within P time-frequency resource blocks in the delay-Doppler domain, where P is an integer greater than 1.

Optionally, the second determining module 1102 is specifically configured to determine P pieces of sub-indication information according to a first position of a pilot pattern in each of the P time-frequency resource blocks in the delay-Doppler domain; and determine the first indication information according to the P pieces of sub-indication information.

Optionally, the P time-frequency resource blocks satisfy any one of the following:

the P time-frequency resource blocks are located in a same time resource and different frequency resources;
the P time-frequency resource blocks are located in a same frequency resource and different time resources; and
the P time-frequency resource blocks are located in different frequency resources in a preset time period.

Optionally, the sub-indication information is a first bit sequence.

Optionally, the second determining module 1102 is specifically configured to cascade P first bit sequences according to a preset order to obtain a second bit sequence, where the first indication information includes the second bit sequence.

Optionally, the preset order is determined by an arrangement order of a second position, and the second position is a position of a time-frequency resource block mapped after the pilot is transformed from a delay-Doppler resource domain to the time-frequency domain.

Optionally, the first indication information is used to indicate a cell identifier or a user equipment identifier.

The pilot reception processing apparatus 1100 provided in this embodiment of this application can implement each processes implemented by the receiving device in the method embodiment of FIG. 5. To avoid repetition, details are not described herein again.

It should be noted that, the pilot transmission method provided in this embodiment of this application may be performed by a pilot transmission apparatus or a control module that is in the pilot transmission apparatus and that is configured to perform the pilot transmission method. In an embodiment of this application, the pilot transmission method provided in this embodiment of this application is described by using an example in which the pilot transmission apparatus performs the pilot transmission method.

Please refer to FIG. 12. FIG. 12 is a structural diagram of a pilot transmission apparatus provided by an embodiment of this application. As shown in FIG. 12, the pilot transmission apparatus 1200 includes:

a mapping module 1201, configured to map a pilot pattern corresponding to a pilot to a first position in a delay-Doppler domain; and
a transmission module 1202, configured to transmit the pilot at the first position, where the first position is used to indicate first indication information.

Optionally, a delay-Doppler resource block in the delay-Doppler domain includes Q sub-regions, where Q is an integer greater than 1, and the first position includes a target sub-region in the Q sub-regions, and the pilot pattern is located in the target sub-region.

Optionally, a complete pilot pattern is located in a sub-region.

Optionally, each sub-region is a rectangular region of $m_i \times n_i$, and each sub-region satisfies: $\begin{cases} m_i \geq l_p + l_\tau \\ n_i \geq k_p + 2k_v \end{cases}$, where $m_i$ represents a length of the sub-region in a delay dimension, $n_i$ represents a length of the sub-region in a Doppler dimension, $l_\tau$ represents a $\frac{1}{2}$ length of the pilot pattern in the delay dimension, $k_v$ represents a $\frac{1}{4}$ length of the pilot pattern in the Doppler dimension, and $l_p$ and $k_p$ represent coordinates of a position at which the pilot is transmitted in the pilot pattern in a target coordinate system, where the target coordinate system is a coordinate system established based on a vertex angle of the sub-region as an original point.

Optionally, the first indication information is determined according to first positions of pilot patterns within P time-frequency resource blocks in the delay-Doppler domain, where P is an integer greater than 1.

Optionally, a first position, in the delay-Doppler domain, of a pilot pattern in each of the P time-frequency resource blocks indicates P pieces of sub-indication information, and the first indication information is determined by the P pieces of sub-indication information.

Optionally, the P time-frequency resource blocks satisfy any one of the following:

the P time-frequency resource blocks are located in a same time resource and different frequency resources;
the P time-frequency resource blocks are located in a same frequency resource and different time resources; and
the P time-frequency resource blocks are located in different frequency resources in a preset time period.

Optionally, the sub-indication information is a first bit sequence.

Optionally, the first indication information includes a second bit sequence obtained by cascading P first bit sequences in a preset order.

Optionally, the preset order is determined by an arrangement order of a second position, and the second position is a position of a time-frequency resource block mapped after the pilot is transformed from a delay-Doppler resource domain to the time-frequency domain.

Optionally, the first indication information is used to indicate a cell identifier or a user equipment identifier.

The pilot transmission apparatus 1200 provided in this embodiment of this application can implement each processes implemented by the transmission device in the method embodiment of FIG. 10. To avoid repetition, details are not described herein again.

The pilot reception processing apparatus and the pilot transmission apparatus in the embodiments of this application may be apparatuses, or may be components, integrated circuits, or chips in a user equipment. The apparatus may be a mobile terminal, or a non-mobile terminal. For example, the mobile device may include but is not limited to the types of the user equipment 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The pilot reception processing apparatus and the pilot transmission apparatus in this embodiment of this application may be an apparatus with an operating system. The operating system may be an Android (Android) operating system, may be an iOS operating system, or may be another possible operating system, which is not specifically limited in the embodiments of this application.

The pilot reception processing apparatus and pilot transmission apparatus provided in this embodiment of this application can implement the processes implemented in the method embodiments in FIG. 5 to FIG. 10, and a same technical effect can be achieved. To avoid repetition, details are not described herein again.

Optionally, as shown in FIG. 13, an embodiment of this application further provides a communication device 1300, including a processor 1301, a memory 1302, a program or an instruction stored in the memory 1302 and executable on the processor 1301. For example, when the communication device 1300 is a user equipment, the program or the instruction is executed by the processor 1301 to implement the processes of the foregoing embodiment of the pilot reception processing method, and a same technical effect can be achieved. In a case that the communication device 1300 is a transmission device, when the program or the instruction is executed by the processor 1301, each process of the embodiment of the pilot reception method is implemented, and a same technical effect can be achieved. To avoid repetition, details are not described herein again.

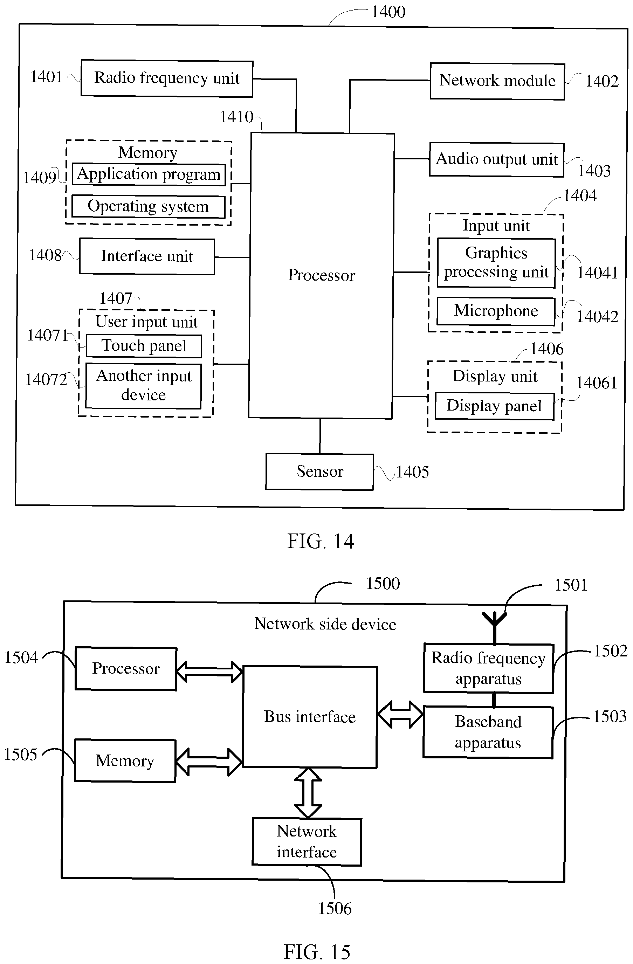

FIG. 14 is a schematic diagram of a hardware structure of a terminal device for implementing the embodiments of this application.

The terminal device 1400 includes but is not limited to components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

It can be understood by a person skilled in the art that the terminal device 1400 may further include a power supply (such as a battery) that supplies power to each component. The power supply may be logically connected to the processor 1410 by using a power management system, to implement functions such as charging, discharging, and power consumption management by using the power management system. The terminal structure shown in FIG. 14 constitutes no limitation on the terminal, and the terminal may include more or fewer components than those shown in the figure, or combine some components, or have different component arrangements. Details are not described herein.

It should be understood that, in this embodiment of this application, the input unit 1404 may include a graphics processing unit (Graphics Processing Unit, GPU) 14041 and a microphone 14042, and the graphics processing unit 14041 processes image data of a still picture or a video obtained by an image capture apparatus (such as a camera) in a video capture mode or an image capture mode. The display unit 1406 may include a display panel 14061, and the display panel 14061 may be configured in a form of a liquid crystal display, an organic light-emitting diode, or the like. The user input unit 1407 includes a touch panel 14071 and another input device 14072. The touch panel 14071 is also referred to as a touchscreen. The touch panel 14071 may include two parts: a touch detection apparatus and a touch controller. The another input device 14072 may include but is not limited to a physical keyboard, a functional button (such as a volume control button or a power on/off button), a trackball, a mouse, and a joystick. Details are not described herein.

In this embodiment of this application, the radio frequency unit 1401 receives downlink data from a network device and then transmits the downlink data to the processor 1410 for processing; and transmits uplink data to the network device. Generally, the radio frequency unit 1401 includes but is not limited to: an antenna, at least one amplifier, a transceiver, a coupler, a low noise amplifier, a duplexer, and the like.

The memory 1409 may be configured to store a software program or an instruction and various data. The memory 109 may mainly include a program or instruction storage area and a data storage area. The program or instruction storage area may store an operating system, and an application program or an instruction required by at least one function (for example, a sound playing function or an image playing function). In addition, the memory 1409 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1410 may include one or more processing units. Optionally, an application processor and a modem processor may be integrated into the processor 1410. The application processor mainly processes an operating system, a user interface, an application program, an instruction, or the like. The modem processor mainly processes wireless communications, for example, a baseband processor. It can be understood that, alternatively, the modem processor may not be integrated into the processor 1410.

When the receiving device is a terminal and the transmission device is another terminal or a network side device, the processor 1410 is configured to determine a first position of a pilot pattern corresponding to a pilot in a delay-Doppler domain; and determine first indication information according to the first position.

It should be understood that, in this embodiment, the processor 1410 and the radio frequency unit 1401 can implement processes implemented by the receiving device in the method embodiment in FIG. 5. To avoid repetition, details are not described herein again.

When the transmission device is a terminal and the receiving device is another terminal or a network side device,

the processor 1410 is configured to map a pilot pattern corresponding to a pilot to a first position in a delay-Doppler domain; and
the radio frequency unit 1401 is configured to transmit the pilot at the first position, where the first position is used to indicate first indication information.

It should be understood that, in this embodiment, the processor 1410 and the radio frequency unit 1401 can implement processes implemented by the transmission device in the method embodiment in FIG. 10. To avoid repetition, details are not described herein again.

Specifically, an embodiment of this application further provides a network side device. The network side device may be a receiving device or a transmission device. When the receiving device is a terminal, the transmission device may be another terminal or a network side device. When the receiving device is a network side device, the transmission device is a terminal. As shown in FIG. 15, a network side device 1500 includes an antenna 1501, a radio frequency apparatus 1502, and a baseband apparatus 1503. The antenna 1501 is connected to the radio frequency apparatus 1502. In an uplink direction, the radio frequency apparatus 1502 receives information by using the antenna 1501, and transmits the received information to the baseband apparatus 1503 for processing. In a downlink direction, the baseband apparatus 1503 processes to-be-transmitted information, and transmits the to-be-sent information to the radio frequency apparatus 1502. After processing the received information, the radio frequency apparatus 1502 transmits the information by using the antenna 1501.

The frequency band processing apparatus may be located in the baseband apparatus 1503. The method performed by the network side device in the foregoing embodiment may be implemented in the baseband apparatus 1503. The baseband apparatus 1503 includes a processor 1504 and a memory 1505.

For example, the baseband apparatus 1503 may include at least one baseband board. Multiple chips are disposed on the baseband board. As shown in FIG. 15, one chip is, for example, the processor 1504, and is connected to the memory 1505, to invoke a program in the memory 1505 to perform an operation of the network side device shown in the foregoing method embodiment.

The baseband apparatus 1503 may further include a network interface 1506, configured to exchange information with the radio frequency apparatus 1502, where the interface is, for example, a common public radio interface (common public radio interface, CPRI).

Specifically, the network side device in this embodiment of this application further includes an instruction or a program stored in the memory 1505 and executable on the processor 1504. When the network-side device is a receiving device, the processor 1504 calls an instruction or a program in the memory 1505 to control performing of the method performed by each module shown in FIG. 11, and when the network-side device is a transmission device, the processor 1504 calls the instruction or program in the memory 1505 to control performing of the method performed by each module shown in FIG. 12, and a same technical effect can be achieved. To avoid repetition, details are not described herein again.

An embodiment of this application further provides a readable storage medium, where the readable storage medium stores a program or an instruction, and when the program or the instruction is executed by a processor, the processes of the foregoing pilot reception processing method or the pilot transmission method is implemented, and a same technical effect can be achieved. To avoid repetition, details are not described herein again.

The processor is a processor in the electronic device in the foregoing embodiment. The readable storage medium includes a computer-readable storage medium, such as a computer read-only memory (ROM), a random access memory (RAM), a magnetic disk, or an optical disc.

An embodiment of this application further provides a chip, where the chip includes a processor and a communication interface, the communication interface is coupled to the processor, and the processor is configured to execute a program or an instruction of a network device to implement the foregoing processes of the foregoing embodiment of the pilot transmission method, and a same technical effect can be achieved. To avoid repetition, details are not described herein again.

It should be understood that the chip mentioned in this embodiment of this application may also be referred to as a system-level chip, a system chip, a system on chip, an on-chip system chip, and the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

A person of ordinary skill in the art may recognize that, with reference to the examples described in the embodiments disclosed herein, units and algorithm steps may be implemented by electronic hardware or a combination of computer software and electronic hardware. Whether these functions are implemented by using hardware or software depends on the specific application and design constraints of the technical solution. A person skilled in the art may use different methods to implement the described functions for each particular application, but it should not be considered that the implementation goes beyond the scope of the present disclosure.

It may be clearly understood by a person skilled in the art that, for convenience and brevity of description, for a specific working process of the above described system, apparatus, and unit, reference may be made to a corresponding process in the above method embodiments, and details are not described herein again.

In the embodiments provided in this application, it should be understood that the disclosed apparatus and method may be implemented in another manner. For example, the described apparatus embodiment is merely an example. For example, the unit division is merely logical function division. In actual implementation, there may be another division manner. For example, multiple units or components may be combined or integrated into another system, or some features may be ignored or not performed. In addition, the displayed or discussed mutual coupling or direct coupling or communication connection may be through some interfaces, indirect coupling or communication connection of the apparatus or unit, and may be in an electrical, mechanical, or another form.

The units described as separate parts may or may not be physically separate, and parts displayed as units may or may not be physical units, may be located in one place, or may be distributed on multiple network units. Some or all of the units may be selected based on an actual requirement to implement the objectives of the solutions in the embodiments.

In addition, functional units in the embodiments of the present disclosure may be integrated into one processing unit, or each of the units may exist alone physically, or two or more units are integrated into one unit.

Based on the descriptions of the foregoing implementation manners, a person skilled in the art may clearly understand that the method in the foregoing embodiment may be implemented by software in addition to a necessary universal hardware platform or by hardware only. In most circumstances, the former is a preferred implementation manner. Based on such understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in the embodiments of this application.

It can be understood that the embodiments described in the present disclosure may be implemented by hardware, software, firmware, middleware, microcode, or a combination thereof. For hardware implementation, a module, a unit, a subunit, or the like may be implemented in one or more application specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general purpose processor, a controller, a microcontroller, a microprocessor, another electronic unit configured to perform the functions described in the present disclosure, or a combination thereof.

For implementation with software, technologies described in the embodiments of the present disclosure may be implemented by executing functional modules (for example, a process and a function) in the embodiments of the present disclosure. A software code may be stored in the memory and executed by the processor. The memory may be implemented in the processor or outside the processor.

The embodiments of this application are described above with reference to the accompanying drawings, but this application is not limited to the foregoing specific implementation manners. The foregoing specific implementation manners are merely schematic instead of restrictive. Under enlightenment of this application, a person of ordinary skills in the art may make many forms without departing from aims and the protection scope of claims of this application, all of which fall within the protection scope of this application.

**Claims**

1. A pilot reception processing method, performed by a receiving device and comprising:

   determining a first position of a pilot pattern corresponding to a pilot in a delay-Doppler domain; and
   determining first indication information according to the first position.

2. The method according to claim 1, wherein a delay-Doppler resource block in the delay-Doppler domain comprises Q sub-regions, wherein Q is an integer greater than 1, and the first position comprises a target sub-region in the Q sub-regions, and the pilot pattern is located in the target sub-region.

3. The method according to claim 2, wherein a complete pilot pattern is located in a sub-region.

4. The method according to claim 3, wherein each sub-region is a rectangular region of $m_i \times n_i$, and each sub-region satisfies: $\begin{cases} m_i \geq l_p + l_\tau \\ n_i \geq k_p + 2k_v \end{cases}$, wherein $m_i$ represents a length of the sub-region in a delay dimension, $n_i$ represents a length of the sub-region in a Doppler dimension, $l_\tau$ represents a $\frac{1}{2}$ length of the pilot pattern in the delay dimension, $k_v$ represents a $\frac{1}{4}$ length of the pilot pattern in the Doppler dimension, and $l_p$ and $k_p$ represent coordinates of a position at which the pilot is transmitted in the pilot pattern in a target coordinate system, wherein the target coordinate system is a coordinate system established based on a vertex angle of the sub-region as an original point.

5. The method according to claim 4, wherein the determining first indication information according to the first position comprises:
determining the first indication information according to first positions of pilot patterns within P time-frequency resource blocks in the delay-Doppler domain, wherein P is an integer greater than 1.

6. The method according to claim 5, wherein the determining the first indication information according to first positions of pilot patterns within P time-frequency resource blocks in the delay-Doppler domain comprises:

   determining P pieces of sub-indication information according to a first position of a pilot pattern in each of the P time-frequency resource blocks in the delay-Doppler domain; and
   determining the first indication information according to the P pieces of sub-indication information.

7. The method according to claim 5, wherein the P time-frequency resource blocks satisfy any one of following:

   the P time-frequency resource blocks are located in a same time resource and different frequency resources;
   the P time-frequency resource blocks are located in a same frequency resource and different time resources; and
   the P time-frequency resource blocks are located in different frequency resources in a preset time period.

8. The method according to claim 6, wherein the sub-indication information is a first bit sequence.

9. The method according to claim 8, wherein the determining the first indication information according to the P pieces of sub-indication information comprises:
cascading P first bit sequences according to a preset order to obtain a second bit sequence, wherein the first indication information comprises the second bit sequence.

10. The method according to claim 9, wherein the preset order is determined by an arrangement order of a second position, and the second position is a position of a time-frequency resource block mapped after the pilot is transformed from a delay-Doppler resource domain to a time-frequency domain.

11. The method according to claim 1, wherein the first indication information is used to indicate a cell identifier or a user equipment identifier.

12. A pilot transmission method, performed by a transmission device and comprising:

   mapping a pilot pattern corresponding to a pilot to a first position in a delay-Doppler domain; and
   transmitting the pilot at the first position, wherein the first position is used to indicate first indication information.

13. The method according to claim 12, wherein a delay-Doppler resource block in the delay-Doppler domain comprises Q sub-regions, wherein Q is an integer greater than 1, and the first position comprises a target sub-region in the Q sub-regions, and the pilot pattern is located in the target sub-region.

14. The method according to claim 13, wherein a complete pilot pattern is located in a sub-region.

15. The method according to claim 14, wherein each sub-region is a rectangular region of $m_i \times n_i$, and each sub-region satisfies: $\begin{cases} m_i \geq l_p + l_\tau \\ n_i \geq k_p + 2k_v \end{cases}$, wherein $m_i$ represents a length of the sub-region in a delay dimension, $n_i$ represents a length of the sub-region in a Doppler dimension, $l_\tau$ represents a $\frac{1}{2}$ length of the pilot pattern in the delay dimension, $k_v$ represents a $\frac{1}{4}$ length of the pilot pattern in the Doppler dimension, and $l_p$ and $k_p$ represent coordinates of a position at which the pilot is transmitted in the pilot pattern in a target coordinate system, wherein the target coordinate system is a coordinate system established based on a vertex angle of the sub-region as an original point.

16. The method according to claim 12, wherein the first indication information is determined according to first positions of pilot patterns within P time-frequency resource blocks in the delay-Doppler domain, wherein P is an integer greater than 1.

17. The method according to claim 16, wherein a first position, in the delay-Doppler domain, of a pilot pattern in each of the P time-frequency resource blocks indicates P pieces of sub-indication information, and the first indication information is determined by the P pieces of sub-indication information.

18. The method according to claim 16, wherein the P time-frequency resource blocks satisfy any one of following:

the P time-frequency resource blocks are located in a same time resource and different frequency resources;
the P time-frequency resource blocks are located in a same frequency resource and different time resources; and
the P time-frequency resource blocks are located in different frequency resources in a preset time period.

19. The method according to claim 17, wherein the sub-indication information is a first bit sequence.

20. The method according to claim 19, wherein the first indication information comprises a second bit sequence obtained by cascading P first bit sequences in a preset order.

21. The method according to claim 20, wherein the preset order is determined by an arrangement order of a second position, and the second position is a position of a time-frequency resource block mapped after the pilot is transformed from a delay-Doppler resource domain to a time-frequency domain.

22. The method according to claim 12, wherein the first indication information is used to indicate a cell identifier or a user equipment identifier.

23. A pilot reception processing apparatus, comprising:

a first determining module, configured to determine a first position of a pilot pattern corresponding to a pilot in a delay-Doppler domain; and
a second determining module, configured to determine first indication information according to the first position.

24. The apparatus according to claim 23, wherein a delay-Doppler resource block in the delay-Doppler domain comprises Q sub-regions, wherein Q is an integer greater than 1, and the first position comprises a target sub-region in the Q sub-regions, and the pilot pattern is located in the target sub-region.

25. A pilot transmission apparatus, comprising:

a mapping module, configured to map a pilot pattern corresponding to a pilot to a first position in a delay-Doppler domain; and
a transmission module, configured to transmit the pilot at the first position, wherein the first position is used to indicate first indication information.

26. The apparatus according to claim 25, wherein a delay-Doppler resource block in the delay-Doppler domain comprises Q sub-regions, wherein Q is an integer greater than 1, and the first position comprises a target sub-region in the Q sub-regions, and the pilot pattern is located in the target sub-region.

27. A communication device, comprising: a memory, a processor, and a program or an instruction stored in the memory and executable on the processor, wherein when the program or instruction is executed by the processor, steps of the pilot reception processing method according to any one of claims 1 to 11 are implemented; or when the program or instruction is executed by the processor, steps of the pilot transmission method according to any one of claims 12 to 22 are implemented.

28. A readable storage medium, wherein the readable storage medium stores a program or an instruction, and when the program or instruction is executed by a processor, steps of the pilot reception processing method according to any one of claims 1 to 11 are implemented; or when the program or instruction is executed by a processor, steps of the pilot transmission method according to any one of claims 12 to 22 are implemented.

FIG. 1

FIG. 2

Time-varying
impulse response
g(t,τ)

$\mathcal{F}$                    $\mathcal{F}$

Time-frequency
response
H(t,f)              SFFT              Delay-Doppler
response
h(υ,t)

$\mathcal{F}$                    $\mathcal{F}$

Doppler change
response
B(υ,f)

FIG. 3

401    402

M

Δυ

τ

Delay

Δτ

4021

4022

N

Doppler                υ

FIG. 4

Determine a first position of a pilot pattern corresponding to a pilot in a delay-Doppler domain ⌐ 501

Determine first indication information according to the first position ⌐ 502

FIG. 5

FIG. 6

FIG. 7

FIG. 8

M

Delay

SFFT

M

Frequency

N

Time

FIG. 9

| Map a pilot pattern corresponding to a pilot to a first position in a delay-Doppler domain | 1001 |

| Transmit the pilot at the first position, where the first position is used to indicate first indication information | 1002 |

FIG. 10

1100

Pilot reception processing
apparatus

First determining module — 1101

Second determining module — 1102

FIG. 11

1200

Pilot transmission apparatus

Mapping module — 1201

Transmission module — 1202

FIG. 12

1300

Communication device

1301 — Processor ⟺ Memory — 1302

FIG. 13

1400

1401 Radio frequency unit

Network module 1402

1410

Memory
1409 Application program

Operating system

Audio output unit 1403

1404

Input unit

Graphics processing unit 14041

1408 Interface unit

Processor

Microphone 14042

1407

User input unit
14071 Touch panel

14072 Another input device

1406

Display unit 14061

Display panel

Sensor 1405

FIG. 14

1500 1501

Network side device

1504 Processor

Bus interface

Radio frequency apparatus 1502

Baseband apparatus 1503

1505 Memory

Network interface

1506

FIG. 15

## INTERNATIONAL SEARCH REPORT

| | International application No. |
|---|---|
| | **PCT/CN2021/116499** |

| A. CLASSIFICATION OF SUBJECT MATTER |
|---|
| H04L 5/00(2006.01)i |
| According to International Patent Classification (IPC) or to both national classification and IPC |

| B. FIELDS SEARCHED |
|---|
| Minimum documentation searched (classification system followed by classification symbols) |
| H04L |
| Documentation searched other than minimum documentation to the extent that such documents are included in the fields searched |
| |
| Electronic data base consulted during the international search (name of data base and, where practicable, search terms used) |
| WPI, EPODOC, CNPAT, CNKI, IEEE, 3GPP: 导频 图案 延迟 多普勒 位置 指示 pilot pattern delay doppler location indication |

| C. DOCUMENTS CONSIDERED TO BE RELEVANT | | |
|---|---|---|
| Category* | Citation of document, with indication, where appropriate, of the relevant passages | Relevant to claim No. |
| X | CN 108781072 A (COHERE TECHNOLOGIES) 09 November 2018 (2018-11-09) description paragraphs [0114]-[0183] | 1-28 |
| A | CN 102223326 A (ZTE CORPORATION) 19 October 2011 (2011-10-19) entire document | 1-28 |
| A | CN 104335542 A (INTEL CORPORATION) 04 February 2015 (2015-02-04) entire document | 1-28 |
| A | CN 107682288 A (BEIJING UNIVERSITY OF POSTS AND TELECOMMUNICATIONS) 09 February 2018 (2018-02-09) entire document | 1-28 |
| A | WO 2020080987 A1 (TELEFONAKTIEBOLAGET LM ERICSSON (PUBL)) 23 April 2020 (2020-04-23) entire document | 1-28 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 November 2021** | **02 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| International application No.<br>**PCT/CN2021/116499** |

| Patent document<br>cited in search report | | | Publication date<br>(day/month/year) | Patent family member(s) | | | Publication date<br>(day/month/year) |
|---|---|---|---|---|---|---|---|
| CN | 108781072 | A | 09 November 2018 | KR | 20190008174 | A | 23 January 2019 |
| | | | | WO | 2017100666 | A1 | 15 June 2017 |
| | | | | EP | 3387748 | A1 | 17 October 2018 |
| | | | | EP | 3387748 | A4 | 09 October 2019 |
| | | | | US | 2019342136 | A1 | 07 November 2019 |
| | | | | US | 10666479 | B2 | 26 May 2020 |
| CN | 102223326 | A | 19 October 2011 | | None | | |
| CN | 104335542 | A | 04 February 2015 | JP | 2015524213 | A | 20 August 2015 |
| | | | | JP | 5960355 | B2 | 02 August 2016 |
| | | | | EP | 2898645 | A1 | 29 July 2015 |
| | | | | EP | 2898645 | A4 | 29 June 2016 |
| | | | | US | 2014010324 | A1 | 09 January 2014 |
| | | | | US | 9461855 | B2 | 04 October 2016 |
| | | | | WO | 2014042751 | A1 | 20 March 2014 |
| | | | | KR | 20150016546 | A | 12 February 2015 |
| | | | | KR | 101635305 | B1 | 30 June 2016 |
| CN | 107682288 | A | 09 February 2018 | | None | | |
| WO | 2020080987 | A1 | 23 April 2020 | EP | 3868048 | A1 | 25 August 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010924342